# EUROPÄISCHE PATENTANMELDUNG

(11) **EP 1 285 890 A1**
(43) Veröffentlichungstag der Anmeldung: **26.02.2003**
(21) Anmeldenummer: 02017897.6
(22) Anmeldetag: 09.08.2002
(51) Int. Cl.: C03C 3/115, C03C 4/02

(54) **Optisches Farbglas, seine Verwendung und optisches Steilkantenfilter**

(30) Priorität: 22.08.2001 DE 10141105
(71) Anmelder: Schott Glas, 55122 Mainz (DE); CARL-ZEISS-STIFTUNG trading as SCHOTT GLAS, 55122 Mainz (DE)
(72) Erfinder: Clasen, Rolf, Prof. Dr., 66125 Saarbrücken (DE); Gierke, Monika, 65205 Wiesbaden-Erbenheim (DE); Freund, Jochen, 55128 Mainz (DE); Winkler-Trudewig, Magdalena, 55126 Mainz (DE); Kolberg, Uwe, Dr., 55252 Mainz-Kastel (DE)
(74) Vertreter: Sawodny, Michael-Wolfgang

(57) **Zusammenfassung**

Die Erfindung betrifft ein optisches Farbglas der Zusammensetzung (in Gew.-% auf Oxidbasis)
SiO₂ 30 - 75; K₂O 5 - 35, B₂O₃ > 4 - 17, ZnO 5 - 37; F 0,01 - 10, CdO 0,1 - 1, S + Se + Te 0,1 - 1,5
sowie die Verwendung dieses Glases als Steilkantenfilter.

## Beschreibung

Gegenstand der Erfindung ist ein optisches Farbglas, seine Verwendung sowie ein optisches Steilkantenfilter.

Optische Steilkantenfilter zeichnen sich durch charakteristische Transmissionseigenschaften aus. So zeigen Steilkantenfilter mit Langpasscharakteristik im kurzwelligen Bereich eine niedrige Transmission, die über einen schmalen Spektralbereich zu hoher Transmission ansteigt und im Langwelligen hoch bleibt. Der Bereich niedriger Transmission wird als Sperrbereich bezeichnet, der Bereich hoher Transmission als Pass- oder Durchlassbereich.

Optische Steilkantenfilter werden mittels bestimmter Kenngrößen charakterisiert. So wird die Absorptionskante eines solchen Filters üblicherweise als die sogenannte Kantenwellenlänge λ_{c} angegeben. Sie entspricht der Wellenlänge, bei der der spektrale Reintransmissionsgrad zwischen Sperr- und Durchlassbereich die Hälfte des Maximalwerts beträgt.

Optische Steilkantenfilter werden üblicherweise durch Farbgläser realisiert, in denen durch Ausscheidung von beispielsweise Cadmiumsulfid, -selenid und/oder -tellurid beim Abkühlen der Schmelze oder durch nachträgliche Wärmebehandlung die Färbung erzeugt wird. Man spricht von sogenannten Anlaufgläsern.

In der Patentliteratur sind bereits verschiedene als Anlaufgläser grundsätzlich geeignete Glaszusammensetzungen beschrieben.

JP 50-11924 B beschreibt Li₂O-haltige und hoch BaO-haltige Gläser, die CdS, Se und Te enthalten.

Die Gläser der US 2,416,392 benötigen neben CdS auch CoO, während die Gläser der JP 44-23821 A neben CdS auch Eisenoxide benötigen.

Die Gläser der SU 192373 enthalten neben CdO, Se, S und C auch PbO und Cu₂O. Beim gleichzeitigen Vorhandensein von PbO und den Chalkogeniden kommt es jedoch zu starken unerwünschten Verfärbungen im Glas.

In verschiedenen Schriften sind F-freie Anlaufgläser mit CdS-Dotierung beschrieben, so in DE-AS 1 596 844, JP 43-19402 A, DD 55123 und JP 44-23823 A. Solche Gläser haben hohe Schmelzpunkte. Dies bedeutet eine erhöhte Verdampfung einzelner Komponenten, insbesondere der farbgebenden Substanzen, was vor allem aufgrund deren toxikologischen Eigenschaften unerwünscht ist.

Aus JP 56-5348 A sind SiO₂-arme ebenfalls F-freie Anlaufgläser bekannt, deren geringer SiO₂-Anteil sich nachteilig auf die Eigenschaften chemische Beständigkeit, thermischer Ausdehnungskoeffizient und Transformationstemperatur auswirkt.

Aus US 3,954,485 sind ZnO-freie Anlaufgläser bekannt. Dieses Oxid ist jedoch für die Phasentrennung zur Hervorrufung des Anlaufprozesses wesentlich.

Die Gläser der US 2,688,561, US 2,688,560, DD 14 13 87 und DE 13 03 171 B sind zwar Cd-haltig, enthalten jedoch weder Se oder S noch Te, wodurch die gewünschte Färbung durch die Halbleiterdotierung nicht erreicht werden kann.

Es ist Aufgabe der Erfindung, ein transparentes optisches Farbglas bereitzustellen, das Steilkantenfiltereigenschaften besitzt und zwar eine Absorptionskante zwischen 390 und 850 nm aufweist. Es ist weiter Aufgabe, ein solches Steilkantenfilter bereitzustellen.

Die Aufgaben werden durch ein optisches Farbglas gemäß Anspruch 1, die Verwendung dieses Glases gemäß Anspruch 8 und ein Steilkantenfilter gemäß Anspruch 9 gelöst.

SiO₂ bildet mit 30 bis 75 Gew.-%, vorzugsweise 40 bis 65 Gew.-%, den Hauptbestandteil der Gläser.

Im Gegensatz zu herkömmlichen kommerziell erhältlichen Anlaufgläsern, die borfrei oder mit 1-4 Gew.-% B₂O₃ borarm sind, weisen die erfindungsgemäßen Gläser B₂O₃-Gehalte zwischen > 4 und 17 Gew.-% auf. Dadurch wird die Sintertemperatur erniedrigt und die Auflösung der anderen Glaskomponenten in der Glasmatrix erreicht und bei der Herstellung über Sinterverfahren die Verarbeitbarkeit und Trocknung des Grünkörpers verbessert. Bevorzugt sind Gehalte von wenigstens 5 Gew.-%, besonders bevorzugt von wenigstens > 6 Gew.-%. Höhere Anteile als 16 Gew.-% würden sich nachteilig auf die Glasqualität auswirken. Außerdem ist die Löslichkeit von H₃BO₃, einem möglichen Rohstoff für das Boroxid, in wässriger durch hohe K₂O-Gehalte alkalischer Lösung, auf den genannten B₂O₃-Anteil beschränkt.

Der Rohstoff H₃BO₃ ist besonders dann vorteilhaft, wenn K₂O als Bestandteil des Glases über den Rohstoff KOH eingebracht wird, da so der durch KOH entstehende sehr hohe pH-Wert der Suspension, der Auswirkungen auf ihre Viskosität hat und aggressiv auf das Mischequipment wirkt, gesenkt wird.

Eine wesentliche Komponente ist ZnO. Dieses Oxid liegt mit 5 bis 37 Gew.-% vor. So wird die Kristallisation des Dotiermaterials in homogen verteilten Bereichen des Glases erreicht. Dadurch findet bei der Temperung des Glases ein homogener Kristallitwachstum der Halbleiterdotierung statt, und es entstehen Kristallite mit einer sehr schmalen Größenverteilung. Aus diesen monodispersen Kristalliten resultiert die sehr reine und leuchtende Farbe und die scharfe Absorptionskante der Gläser. Die genannte Obergrenze an ZnO ist sinnvoll, da Gläser, die einen hohen ZnO-Gehalt aufweisen, eine Tendenz zur Bildung von tropfenartigen Ausscheidungsbereichen haben. Bevorzugt ist ein ZnO-Anteil von 5 bis 30 Gew.-%, insbesondere 9 bis 30 Gew.-%, besonders bevorzugt von 15 bis 23 Gew.-%. Die Entmischungstendenz solcher "Zinksilicat-Gläser" kann durch den Einsatz des Netzwerkwandlers K₂O erniedrigt werden. Daher enthalten die Gläser, um Mikroausscheidungen von ZnO-angereicherten Bereichen zu verhindern und um ihre Verarbeitungstemperatur zu reduzieren, 5 bis 35 Gew.-%, vorzugsweise 15 bis 29 Gew.-% K₂O. Insbesondere bei einem ZnO-Gehalt von > 5 Gew.-% ist ein K₂O-Gehalt von > 5 Gew.-% und bei einem ZnO-Gehalt von > 10 Gew.-% ein K₂O-Gehalt von > 17 Gew.-% bevorzugt. So werden hoch transparente Gläser erhalten.

Weiter enthalten die Gläser zwischen 0,01 und 10 Gew.-% F. Dies ist insbesondere dann vorteilhaft, wenn die Gläser über Sinterprozesse hergestellt werden, denn durch F-Anteile wird ihre Sintertemperatur reduziert und wird die Festigkeit des Grünkörpers erhöht. Bei der Herstellung über einen Schmelzprozess wird durch das Vorhandensein von F die Schmelztemperatur herabgesetzt und werden damit Verdampfungen der Farbstoffe aus der Schmelze verringert, was insbesondere hinsichtlicht der verwendeten Cadmium-Verbindungen ein sehr großer Vorteil ist. Bevorzugt sind wenigstens 0,3 Gew.-% F.

Eine hohe Festigkeit des Grünkörpers ist für seine Verarbeitung, seinen Transport und seine Handhabung von Bedeutung. Die Festigkeit des Grünkörpers wird davon bestimmt, dass sich zwischen benachbarten SiOH-Gruppen Wasserstoffbrückenbindungen ausbilden und so den Grünkörper vernetzen. Beim Vorhandensein von F bilden sich auch Bindungen zwischen -SiF und -SiOH aus, die stärker als die erstgenannten Bindungen sind und so schon beim Vorhandensein von geringen Mengen Fluor die Festigkeit erhöhen. Bei zu hohen F-Gehalten (> 10 Gew.-%) verschlechtern sich die Trocknungseigenschaften zu sehr. Außerdem wird der thermische Ausdehnungskoeffizient zu hoch und die Transformationstemperatur zu niedrig. Bevorzugt sind F-Gehalte von < 5 Gew.-%.

Als Dotierungsbestandteile zur Farbgebung enthalten die Gläser 0,1 bis 1 Gew.-% CdO und 0,1 bis 1,5 Gew.-% S + Se + Te. Aus Cd als kationischer und S, Se, Te als anionische Komponenten bilden sich Mischkristalle in situ aus CdS/CdSe/CdTe, je nach Mengenverhältnis der zugesetzten Komponenten und den gewählten, vom Fachmann leicht zu bestimmenden, Reaktionsbedingungen.

Auch Zn kann in diese Kristalle eingebaut werden, insbesondere wenn es als Rohstoff ZnS zugegeben wird und wenig "Cd" vorliegt. Die sich bildenden Kristalle können also als (Cd, Zn), (S, Se, Te) beschrieben werden, wobei die durch Komma getrennten Komponenten sich gegenseitig in weiten Bereichen oder vollständig substituieren können. Durch Variation der Anteile des jeweiligen Chalkogenids lässt sich die Absorptionskante im Bereich zwischen 390 und 850 nm verschieben.

Die Gläser können außerdem bis zu 20 Gew.-% Na₂O, bis zu 20 Gew.-%, vorzugsweise bis zu 10 Gew.-% MgO, bis zu 20 Gew.-%, vorzugsweise bis zu 10 Gew.-% CaO und bis zu 10 Gew.-% Al₂O₃ enthalten. Dabei dient Na₂O dem gleichen Zweck wie K₂O. Es kann dieses teilweise oder vollständig substituieren, das heißt vorzugsweise beträgt die Summe aus K₂O und Na₂O maximal 35 Gew.-%, insbesondere max. 29 Gew.-%. Bei höheren Konzentrationen an Na₂O würde die chemische Beständigkeit nachlassen, der Ausdehnungskoeffizient zu hoch und die Transformationstemperatur zu niedrig werden. Auch die anderen (teureren) Alkalioxide Li₂O, Rb₂O, Cs₂O sind hier, vom preislichen Nachteil abgesehen, prinzipiell denkbar. Bei der als Substitut von K₂O (bzw. Na₂O) (Angabe in Gew.-%) denkbaren Menge sind die unterschiedlichen Molmassen dieser Oxide zu berücksichtigen. Die Summe aus MgO und CaO soll 20 Gew.-% nicht überschreiten. Durch MgO und CaO wird die chemische Beständigkeit verbessert. Außerdem bestehen preisliche Vorteile. Es ist jedoch darauf zu achten, dass bei Verwendung von größeren Mengen insbesondere von CaO vorzugsweise nur wenig F verwendet werden sollte, da sich sonst Kristalle vom Typ MF₂ (M = (Mg), Ca, Sr, Ba) bilden. Bei größeren Mengen als 10 Gew.-% MgO oder CaO besteht im übrigen die Gefahr der Kristallisation anderer Verbindungen als MF₂ sowie eines nicht mehr gleichmäßigen und kontrollierbaren Ausscheideverhaltens der Farbkomponenten, so dass der besonders bevorzugte Bereich sowohl für MgO als auch für CaO < 10 Gew.-% ist. Al₂O₃ dient zur Verbesserung der chemischen Beständigkeit. Bei größeren Mengen steigt jedoch die Sinter-/Schmelztemperatur stark an. Bevorzugt werden nicht mehr als 5 Gew.-% verwendet.

Weiter können die Gläser zur Feinabstimmung von Ausdehnungskoeffizient, Transformationstemperatur Tg und Verarbeitungstemperatur V_{A} bis zu < 10 Gew.-% SrO und bis zu < 10 Gew.-% BaO enthalten. Auch hier gilt, dass diese Oxide vorzugsweise nicht gleichzeitig mit größeren Mengen F verwendet werden sollten, um die oben beschriebene Kristallisation von MF₂ zu vermeiden. Außerdem sind SrO und BaO teuerer als die in vielen Wirkungen ähnlichen MgO und CaO und werden daher nur eingeschränkt verwendet. Bevorzugt sind Gehalte < 5 Gew.-%. Es ist besonders bevorzugt, dass in Gläsem, in denen der F-Gehalt zwischen 1 und 10 Gew.-% beträgt, der Gehalt an Erdalkalioxiden (MgO + CaO + SrO + BaO) auf < 3 Gew.-%, vorzugsweise auf ≤ 1 Gew.-% beschränkt ist oder dass die Gläser erdalkalioxidfrei sind, und dass in Gläsern, in denen der Gehalt an MgO + CaO + SrO + BaO > 3 Gew.-% beträgt, der Gehalt an F auf < 1 Gew.-% beschränkt ist. Vorzugsweise ist der Gehalt an F bereits in Gläsern, in denen der Erdalkalioxidgehalt > 1 Gew.-% ist, auf < 1 Gew.-% beschränkt.

Die Gläser können weiter bis zu 5 Gew.-% La₂O₃, bis zu 5 Gew.-% Nb₂O₅, bis zu 5 Gew.-% Ta₂O₅, bis zu 5 Gew.-% CeO₂, bis zu 5 Gew.-% ZrO₂, und bis zu 10 Gew.-% P₂O₅ enthalten. P₂O₅ verbessert die Schmelz-/Sinterbarkeit. Da es aber ungünstige Auswirkungen auf den Ausdehnungskoeffizienten und die chemische Beständigkeit hat, wird man es bevorzugt nur bis 5 Gew.-% und besonders bevorzugt nur bis 3 Gew.-% verwenden. Refraktäre Oxide, also Oxide mit hohem Schmelzpunkt und/oder guter chemischer Beständigkeit gegen die Glasschmelze, wie z. B. ZrO₂, Nb₂O₅, Ta₂O₅ und La₂O₃, können zur Verbesserung der chemischen Beständigkeit und zur Beeinflussung von Ausdehnungskoeffizient, Tg und V_{A}, verwendet werden. Aufgrund ihrer schlechten Schmelz-/Sinterfähigkeit und des hohen Preises wird man sie nur bis 5 Gew.-%, bevorzugt bis 3 Gew.-% einführen. CeO₂ bieten zusätzlich die Möglichkeit, bei den hellen (gelben) Gläsern den Sperrbereich zu verbessern.

Weiter können in den Gläsern übliche Läutermittel in üblichen Mengen verwendet werden.

Als Läutermittel werden alle Komponenten verstanden, die im Temperaturbereich, vorgegeben durch das Verfahren, durch Redoxreaktionen Gase abgeben oder verdampfen. Bevorzugt werden Läutermittel, die neben der Läuterwirkung einen positiven Einfluss auf die Farbgebung als Folge des Eingriffs in den Redoxbereich haben. Redoxhilfsmittel sind z. B. As₂O₃, Sb₂O₃, As₂S₃ und Sb₂S₃.

Die Gläser können mittels für Anlaufgläser üblicher Schmelzverfahren, d. h. unter neutralen bzw. schwach reduzierenden Bedingungen erschmolzen werden.

Zur Farbgebung müssen die Gläser einem Anlaufprozess unterzogen werden, denn direkt nach dem Abkühlen von der Herstelltemperatur (Schmelzen oder Sintern) sind sie zunächst farblos oder nur schwach und nicht ausreichend gefärbt. Dazu werden sie für einige Stunden bis Tage einer weiteren Temperaturbehandlung im Bereich Tg + ≤ 200 °C unterzogen. Hierbei bilden sich aus dem im Glas gelösten Farbkomponenten Mikrokristallite aus Cd (S, Se, Te), deren Bandabstand zwischen Valenzband und Leitungsband zum einen durch die Zusammensetzung der Kristallite und zum anderen durch deren Größe bestimmt ist. Diese ist wiederum abhängig von Anlauftemperatur und -zeit. Je höher die Temperatur ist und je länger die Anlaufzeit ist, desto größer werden die Kristallite, desto kleiner der Bandabstand und desto langwelliger (= roter) die Eigenfarbe des Glases. Der Bandabstand nähert sich dabei asymptotisch dem Grenzwert des makroskopischen Kristalls gleicher Zusammensetzung. Nach Beendigung des Anlaufprozesses hat sich das für das Glas typische Transmissionsverhalten, nämlich das eines Steilkantenfilters mit Langpasscharakteristik herausgebildet. Es ist gekennzeichnet durch einen Sperrbereich (Untergrund) bei kurzen Wellenlängen und einem sehr abrupten Übergang zu praktisch vollständiger Transmission, dem sogenannten Durchlass- oder Passbereich bei etwas höheren Wellenlängen. Zwischen Sperr- und Passbereich liegen im allgemeinen nur ca. 100 nm. Die Wellenlänge, bei der die Transmission 50 % der Transmission im Passbereich erreicht, wird als Kantenwellenlänge λ_{c} bezeichnet und charakterisiert die Farbe des Glases.

Vorteilhaft können die Gläser auch mit Hilfe eines Sinterprozesses, und zwar nach einer pulvertechnologischen Methode hergestellt werden:

Dabei wird zunächst ein Grünkörper umfassend pulverförmiges SiO₂ hergestellt, der gesintert werden kann. Zur Temperaturreduzierung des Sinterprozesses und zur Abstimmung der Glaseigenschaften auf das Dotiermaterial werden neben dem pulverförmigen SiO₂ weitere Zusätze verwendet, wobei jedoch keine alkoholischen Lösungsmittel und für die Oxide keine organischen, brennbaren und ggf. toxischen Ausgangssubstanzen erforderlich sind.

Als Rohstoffe sollten lösliche Rohstoffe oder Rohstoffe mit einer Teilchengröße < 0,5 µm verwendet werden. Insbesondere der Glasbildner sollte als nanoskaliges Pulver verwendet werden. Unter nanoskaligem Pulver soll hierbei ein Rohstoff mit einem d₅₀-Wert für die durchschnittliche Korngrößen-Verteilung verstanden werden, der im unteren nm-Bereich, das heißt bis ca. 100 nm liegt. Beispielsweise weist der pulverförmige SiO₂-Rohstoffe einen d₅₀-Wert auf. Neben diesem pulverförmigen SiO₂-Rohstoff sind auch SiO₂-Suspensionen als Rohstoff geeignet. Als Rohstoffe für die Zusätze werden Borsäure, Zinkoxid, Kaliumcarbonat, Kalilauge und andere Verbindungen, die Netzwerkeigenschaften besitzen, verwendet. Die Zusätze können aber auch jede andere Art von Carbonaten, Laugen oder Basen, wie z. B. Natronlauge oder Kaliumhydrogenfluorid sein. Es ist dabei unerheblich, ob die Rohstoffe einzeln der Suspension zugeführt werden oder ob zwei oder mehr dieser Rohstoffe bereits als vorgefertigte physikalische oder chemische Mehrkomponenten-Mischphase eingebracht werden. Des weiteren können Dispergierhilfen wie Ammoniumfluorid, weitere Laugen und Säuren wie z. B. Schwefelsäure oder Phosphorsäure zugegeben werden. Da diese Chemikalien standardmäßig auch in analytischer Reinheit angeboten werden können mit Hilfe dieses Verfahrens hochreine optische Gläser erhalten werden, wobei der Grad der Reinheit der Gläser von den Verunreinigungen der zusätzlichen Glaskomponenten abhängt.

Der Grünkörper wird durch Dispergieren und Lösen der Ausgangsmaterialien in beliebiger Reihenfolge in Wasser, optional auch einem alkoholischen Lösungsmittel wie beispielsweise Ethanol, hergestellt.

Dabei werden zusammen mit den Ausgangsmaterialien eine oder mehrere Dotiersubstanzen MX mit M = Cd und X = S, Se, Te, also z. B. CdS, CdSe, aber auch Mischkristalle wie z. B. CdSSe dispergiert oder gelöst.

Anstelle der Verwendung von CdS, CdSe oder CdTe ist auch eine in-situ-Erzeugung der Dotiersubstanzen aus den Elementen, also Cd + Te → CdTe, oder aus anderen Materialien, beispielsweise CdO, Na₂SeO₃ und reduzierenden Gasen möglich. Es müssen dann jedoch zur Unterstützung dieser Reaktionen die angemessenen Temperatur-, Zeit- und pO₂-Bedingungen gewählt werden, die mit den Bedingungen für die Hauptreaktion in Widerspruch treten können, so dass dieser Weg trotz der günstigeren Rohstoffkosten häufig nicht empfehlenswert ist.

Vorteilhafterweise erfolgt das Lösen und Dispergieren der Ausgangsmaterialen und eventueller Dotierstoffe zum Herstellen eines Grünkörpers derart, dass sich eine gießfähige oder streichfähige Suspension ergibt. Dabei wird vorzugsweise die Suspension in eine Form gegossen. Nach der Verfestigung der Suspension bei Raumtemperatur oder Temperaturen kleiner als 130 °C, wird der Grünkörper bei Raumtemperatur oder bei Temperaturen bis zu 400 °C getrocknet. Der getrocknete Grünkörper wird schließlich bei Temperaturen zwischen 600 °C und 1200 °C, vorzugsweise 700 °C bis 1000 °C, je nach Glaszusammensetzung, gesintert oder geschmolzen. Der Fachmann weiß die hier angegebenen Grundbedingungen für Temperaturen und Zeitverläufe für den jeweiligen konkreten Fall zu variieren bzw. ggf. abzuändern.

Optional kann der Grünkörper zur Verbesserung der Homogenität und der letztendlichen Qualität des resultierenden Glases nochmals gemahlen werden oder gemahlen, anschließend dispergiert und getrocknet werden.

Als Ausgangsmaterialien werden in den vorliegenden Ausführungsbeispielen KOH, H₃BO₃, ZnO, KHF₂, SiO₂ und als Dotierungsmaterial CdS bzw. CdSe, verwandt.

Die Ausgangsmaterialien KOH, H₃BO₃, ZnO, KHF₂, CdS bzw. CdSe sowie SiO₂ werden sukzessive in Wasser unter Rühren gelöst oder dispergiert. Optional kann das Einführen der Rohstoffe auch unter Zuhilfenahme von Ultraschall erfolgen oder auch durch den Zusatz von Additiven zur Suspension, um das Dispergieren und Lösen der verschiedenen Rohstoffe zu erleichtern.

Die fertige Suspension wird in eine Form gegossen, in der sie sich verfestigt und 10 bis 96 Stunden an Luft getrocknet. Sie kann auch in beliebige Formen gestrichen oder extrudiert werden. Nach dem Entformen wird der Grünkörper weitere 10 bis 96 Stunden bei Raumtemperatur und anschließend 1 bis 48 Stunden bei 40 bis 400 °C getrocknet.

Die Sinterung zu transparentem Glas geschieht bei Temperaturen zwischen 600 und 1200 °C, je nach Glaszusammensetzung. Die Haltezeiten liegen zwischen 10 min und 5 h. Der nachträgliche Anlaufprozess zur Bildung der CdS- bzw. CdSe-Kristallite wird bei 400 bis 700 °C durchgeführt, wobei die Haltezeiten zwischen 5 und 500 h verwendet werden können.

Die nach dem zweistufigen Verfahren mit Hilfe eines Sinterprozesses hergestellten Gläser können so bei Temperaturen hergestellt werden, die ca. 200 bis 700 °C unter der Herstellungstemperatur der Gläser bei einem reinen Schmelzverfahren liegen. Dies bedeutet eine Energieeinsparung beim Herstellungsprozess, eine deutlich geringere Emission des toxischen Dotiermaterials CdS, CdSe und CdTe, geringeren chemischen Angriff der Schmelzaggregate durch aggressive Glaszusammensetzungen und eine Einsparung an toxischem Dotiermaterial. Durch die Sinterbarkeit der Grünkörper bei dem zweistufigen Verfahren ist es außerdem möglich, den Formgebungsprozess des Glasprodukts bei Raumtemperatur endmaßnahe vorwegzunehmen, wodurch die Verluste bei der Bearbeitung, z. B. beim Sägen, Schleifen und Polieren, deutlich reduziert werden. Durch die Möglichkeit, bei der Grünkörperherstellung Standardchemikalien der chemischen Industrie und der Glasindustrie verwenden zu können und den Formgebungsprozess auf Wasserbasis ablaufen zu lassen, zeichnet sich dieses Verfahren des weiteren durch hohe Umweltfreundlichkeit aus.

In Tabelle 1 sind die Endzusammensetzungen verschiedener Gläser, die nach dem beschriebenen Sinterprozess hergestellt wurden, sowie die Sintertemperatur angegeben.

**Tabelle 1:**

| Zusammensetzungen und Sintertemperaturen von nach dem beschriebenen Sinterverfahren hergestellten Farbgläsern mit CdS-Dotierung | | | | | | | |
|---|---|---|---|---|---|---|---|
| **Beisp.** | | **1.1** | **1.2** | **1.3** | **1.4** | **1.5** | **1.6** |
| Zusammens etzung (Gew.-%) | SiO₂ | 65,25 | 56,39 | 41,23 | 38,35 | 40,34 | 41,21 |
| | K₂O | 16,36 | 16,96 | 25,19 | 27,27 | 23,50 | 25,43 |
| | B₂O₃ | 7,31 | 15,16 | 15,39 | 14,32 | 11,79 | 9,81 |
| | ZnO | 10,87 | 11,28 | 11,45 | 10,65 | 15,78 | 16,48 |
| | F | 0,21 | 0,22 | 6,73 | 9,40 | 8,59 | 7,08 |
| | CdS | 0,73 | 0,71 | 0,50 | 0,49 | 0,49 | 0,52 |
| Sintertemper atur [°C] | | 900 | 850 | 700 | 650 | 650 | 700 |
| Die Menge des Dotiermittels ist additiv zum Grundglas angegeben. | | | | | | | |

In Tabelle 2 sind die gleichen Gläser wie in Tabelle 1 dargestellt, mit dem Unterschied, dass hier die Dotierung CdSe ist. Gleiche Grundgläser sind mit denselben Nummern bezeichnet. Zu beachten ist, dass die Menge der Dotierung von dem Dotierstoff abhängt. Ihre Sintertemperaturen entsprechen den in Tabelle 1 genannten und sind daher in Tabelle 2 nicht angegeben.

Um die Glasqualität, insbesondere im Hinblick auf die Minimierung der Blasenzahl, zu verbessern, kann es von Vorteil sein, die Gläser nicht nur bis zu ihrer Sintertemperatur zu erhitzen, sondern die Temperatur noch etwas zu erhöhen. Dadurch erniedrigt sich die Viskosität der Gläser, und eventuell entstandene Blasen können aus dem Glaskörper entweichen.

Im Unterschied zu Tabelle 1 ist in Tabelle 2 für die Ausführungsbeispiele die Temperatur angegeben, bei der noch im Glas enthaltene Blasen aus dem Glas entweichen. Diese durch das Entweichen der Blasen gekennzeichnete Temperatur wird in der vorliegenden Anmeldung als "Läutertemperatur" bezeichnet. Sie ist wie auch die Sintertemperatur für die genannten Ausführungsbeispiele bei CdS-Dotierung und bei CdSe-Dotierung identisch und daher in Tabelle 1 nicht angegeben. Der geringe Unterschied im Gehalt des Dotiermittels bewirkt praktisch keine Änderung in den Temperaturen.

**Tabelle 2:**

| Zusammensetzungen und Läutertemperaturen von nach dem beschriebenen Sinterverfahren hergestellten Farbgläsern mit CdSe-Dotierung | | | | | | | |
|---|---|---|---|---|---|---|---|
| **Beisp.** | | **2.1** | **2.2** | **2.3** | **2.4** | **2.5** | **2.6** |
| Zusamme | SiO₂ | 65,25 | 56,39 | 41,23 | 38,35 | 40,34 | 41,21 |
| nsetzung | K₂O | 16,36 | 16,96 | 25,19 | 27,27 | 23,50 | 25,43 |
| (Gew.-%) | B₂O₃ | 7,31 | 15,16 | 15,39 | 14,32 | 11,79 | 9,81 |
| | ZnO | 10,87 | 11,28 | 11,45 | 10,65 | 15,78 | 16,48 |
| | F | 0,21 | 0,22 | 6,73 | 9,40 | 8,59 | 7,08 |
| | CdSe | 0,59 | 0,57 | 0,39 | 0,36 | 0,38 | 0,39 |
| Läutertem peratur [°C] | | 1200 | 1150 | 950 | 870 | 890 | 950 |
| Die Menge des Dotiermittels ist additiv zum Grundglas angegeben. | | | | | | | |

Bei beiden beschriebenen Vorgehensweisen werden die Gläser über einen Grünkörper hergestellt.

Werden die Gläser bis auf die beschriebene "Läutertemperatur" erhitzt, so ist es für das Verfahren und die Glasqualität irrelevant, ob diese "Läutertemperatur" in einem Schritt erreicht wird oder ob das Glas zuerst bei der niedrigeren Sintertemperatur glasig gesintert wird und in einem zweiten Temperaturschritt auf diese höhere Temperatur erhöht wird.

Wie die Temperaturwerte deutlich zeigen, liegt die "Läutertemperatur" gemäß der Definition in dieser Anmeldung für die erfindungsgemäßen Gläser stets unter der Herstellungs- und Verarbeitungstemperatur von herkömmlich produzierten Gläsern.

Nachfolgend soll für ein Ausführungsbeispiel beispielhaft für alle anderen Ausführungsbeispiele der detaillierte Weg zur Herstellung des zu sinternden Grünkörpers angegeben werden. Der Grünkörper für das Ausführungsbeispiel 1.6 wird hergestellt über eine Suspension der folgenden Stoffe in 90 I Wasser und enthält:

| **Oxid** | **Gew.-%** | **Rohstoff** | **Einwaage (kg)** |
|---|---|---|---|
| SiO₂ | 41,21 | SiO₂ | 41,21 |
| K₂O | 25,43 | KOH | 22,67 |
| B₂O₃ | 9,81 | H₃BO₃ | 17,51 |
| ZnO | 16,48 | ZnO | 16,48 |
| F | 7,08 | KHF₂ | 14,42 |
| CdS | 0,52 | CdS | 0,52 |

Die verschiedenen Rohstoffe KOH, H₃BO₃, ZnO, KHF₂, CdS, SiO₂ werden sukzessive in Wasser unter Rühren gelöst oder dispergiert. Dadurch entsteht eine gießfähige Suspension, die alle Komponenten des späteren transparenten, gefärbten, optischen Glases enthält.

Die fertige Suspension wird in eine beliebige Form gestrichen, in der sie sich verfestigt, und wird 24 h an Luft getrocknet. Nach dem Entformen wird der Grünkörper weitere 48 h bei Raumtemperatur und anschließend 24 h bei 120 °C getrocknet.

Die Sinterung zu transparentem Glas geschieht bei 700 °C und einer Haltezeit von 1 h. Der nachträgliche Anlaufprozess zur Bildung der CdS-Kristallite wird bei 500 °C durchgeführt, mit einer Haltezeit von 10 h.

Die Gläser sind aufgrund ihres Transmissionsverlaufs hervorragend geeignet für die Verwendung als optische Steilkantenfilter. Die Gläser zeigen im Sperrbereich eine Transmission < 10⁻³ und besser. Die Transmission der Gläser im Durchlassbereich ist ausreichend hoch.

Die Absorptionskante der Gläser ist ausreichend steil und liegt bei Dotierung mit CdS bei ca. 500 nm, bei Dotierung mit CdSe bei ca. 700 nm, bei Verwendung von CdTe können Kanten bis 850 nm realisiert werden. Bei "Mischdotierungen" können entsprechende Zwischen-Kantenlagen erreicht werden. Wenn das molare Verhältnis Cadmium/Chalkogenid < 1 beträgt, verschiebt sich die Kante um ca. 100 nm ins Kurzwellige. Besonders ausgeprägt ist der Effekt beim Sulfid. So werden Kantenlagen bis 390 nm erreicht.

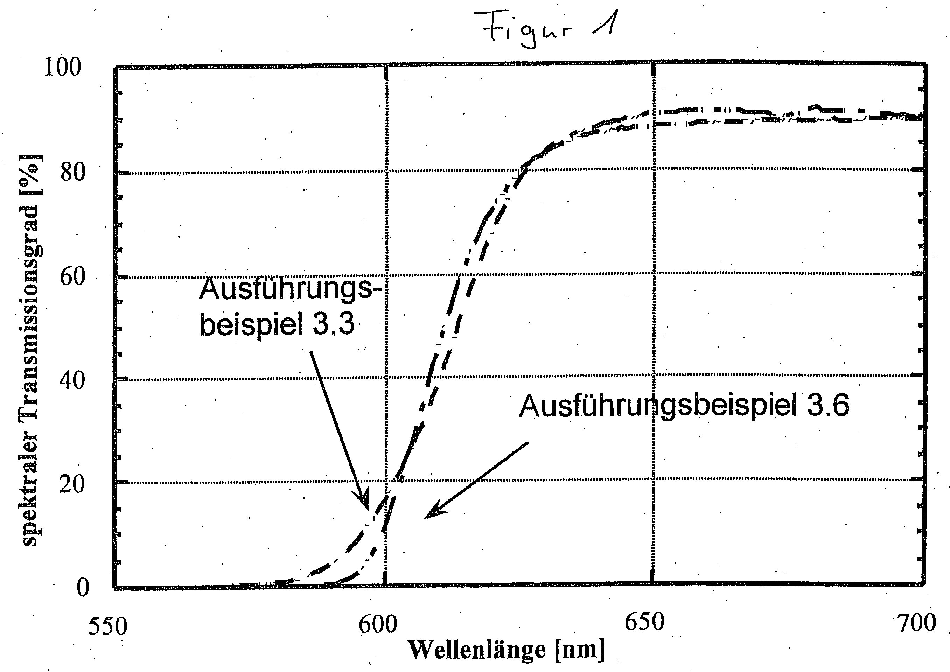

Figur 1 zeigt den Transmissionsverlauf (spektraler Transmissionsgrad versus Wellenlänge bei einer Probendicke von 3 mm) zweier gesinterter Gläser mit Grundzusammensetzungen gemäß den Ausführungsbeispielen x.3 und x.6 mit einer gemischten Dotierung von CdS und CdSe im Wellenlängenbereich von 550 nm bis 700 nm, und zwar von 0,234 CdSe + 0,200 CdS (Auführungsbeispiel 3.3, Bezugsziffer 1) und 0,234 CdSe + 0,208 CdS (Ausführungsbeispiel 3.6, Bezugsziffer 2) (s. auch Tabelle 3).

**Tabelle 3:**

| Zusammensetzungen von nach dem beschriebenen Sinterverfahren hergestellten Farbgläsern mit CdS- und CdSe-Dotierung (Zusammensetzung in Gew.-%) | | |
|---|---|---|
| | **3.3** | **3.6** |
| SiO₂ | 41,23 | 41,21 |
| K₂O | 25,19 | 25,43 |
| B₂O₃ | 15,39 | 9,81 |
| ZnO | 11,45 | 16,48 |
| F | 6,73 | 7,08 |
| CdS | 0,200 | 0,208 |
| CdSe | 0,234 | 0,234 |
| Die Menge der Dotiermittel ist additiv zum Grundglas angegeben. | | |

## Patentansprüche

1. Optisches Farbglas,
**gekennzeichnet durch**
eine Zusammensetzung (in Gew-% auf Oxidbasis) von
| | |
|---|---|
| SiO₂ | 30-75 |
| K₂O | 5-35 |
| B₂O₃ | >4-17 |
| ZnO | 5-37 |
| F | 0,01-10 |
| CdO | 0,1-1 |
| S+Se+Te | 0,1-1,5 |

2. Optisches Farbglas nach Anspruch 1
**gekennzeichnet durch**
eine Zusammensetzung (in Gew.-% auf Oxidbasis) von
| | |
|---|---|
| SiO₂ | 30 - 75 |
| K₂O | 5 - 35 |
| B₂O₃ | > 4 - 17 |
| ZnO | 5 - 30 |
| F | 0,01 - 10 |
| CdO | 0,1 - 1 |
| S+Se+Te | 0,1 - 1,5 |

3. Optisches Farbglas nach Anspruch 1 oder 2,
**gekennzeichnet durch**
eine Zusammensetzung (in Gew.-% auf Oxidbasis) von
| | |
|---|---|
| SiO₂ | 40 - 65 |
| K₂O | 15 - 29 |
| B₂O₃ | 5 - 16 |
| ZnO | 9 - 30 |
| F | 0,01 - 10 |
| CdO | 0,1 - 1 |
| S+Se+Te | 0,1 - 1 |

4. Optisches Farbglas nach wenigstens einem der Ansprüche 1 bis 3, **dadurch gekennzeichnet, dass** das optische Farbglas übliche Läutermittel in üblichen Mengen zusätzlich enthält.

5. Optisches Farbglas nach wenigstens einem der Ansprüche 1 bis 4,
**dadurch gekennzeichnet,**
**dass** es zusätzlich enthält (in Gew.-% auf Oxidbasis)
| | |
|---|---|
| Na₂O | 0 - 20 |
| MgO | 0 - 20 |
| CaO | 0 - 20 |
| mit CaO + MgO | 0 - 20 |
| Al₂O₃ | 0 - 10 |

6. Optisches Farbglas nach wenigstens einem der Ansprüche 1 bis 5,
**dadurch gekennzeichnet,**
**dass** es zusätzlich enthält (in Gew.-% auf Oxidbasis)
| | |
|---|---|
| SrO | 0 - < 10 |
| BaO | 0 - < 10 |
| La₂O₃ | 0 - 5 |
| Nb₂O₅ | 0 - 5 |
| Ta₂O₅ | 0 - 5 |
| CeO₂ | 0 - 5 |
| ZrO₂ | 0 - 5 |
| P₂O₅ | 0 - 10 |

7. Optisches Farbglas nach wenigstens einem der Ansprüche 1 bis 6,
**dadurch gekennzeichnet,**
**dass** es enthält
| | | |
|---|---|---|
| | F | 1 - 10 |
| und | MgO + CaO + SrO + BaO | 0 - < 3 |

8. Optisches Farbglas nach Anspruch 5 oder 6,
**dadurch gekennzeichnet,**
**dass** es enthält
| | |
|---|---|
| MgO + CaO + SrO + BaO | ≥ 3 |
| und F | 0,01 - < 1 |

9. Optisches Farbglas nach wenigstens einem der Ansprüche 1 bis 8
mit einer Absorptionskante (= Kantenwellenlänge λ_{c}) zwischen 390 nm und 850 nm.

10. Verwendung eines Glases nach wenigstens einem der Ansprüche 1 bis 9 als optisches Steilkantenfilter.

11. Optisches Steilkantenfilter, bestehend aus einem Glas nach wenigstens einem der Ansprüche 1 bis 9.
